(19) Europäisches Patentamt
European Patent Office
Office européen des brevets

(11)  EP 3 170 388 A1

(12)  EUROPÄISCHE PATENTANMELDUNG

(43) Veröffentlichungstag:
24.05.2017  Patentblatt 2017/21

(51) Int Cl.:
A01K 63/04 (2006.01)    A01K 61/10 (2017.01)

(21) Anmeldenummer: 16196160.2

(22) Anmeldetag: 28.10.2016

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(30) Priorität: 29.10.2015  RU 2015146537

(71) Anmelder: Kitashin, Jurii
140003 Lubertsy (RU)

(72) Erfinder:
• KITASHIN, Jurii
Lubertsy 140003 (RU)
• KITASHIN, Oleg
Lubertsy 140003 (RU)

(74) Vertreter: Jeck, Anton
Jeck & Fleck
Patentanwälte
Klingengasse 2
71665 Vaihingen/Enz (DE)

(54)  SPEISEFISCHAUFZUCHTVERFAHREN FÜR KREISLAUFANLAGEN (AUSGESTALTUNGEN)

(57)  Die Erfindung bezieht sich auf ein Verfahren zur Aufzucht von Speisefischen in Kreislaufanlagen, wobei die Fische in wassergefüllte Tanks ausgesetzt und regelmäßig gefüttert werden, wobei Wasserparameter und Wasserversorgungskenndaten aufrechterhalten werden. Die Wasserfördermenge in Richtung Nitrifikationsanlage wird in einem Wertebereich zwischen dem 7- und 14-fachen Inhalt der Nitrifikationsanlage pro Stunde eingestellt, wobei die Umströmungsgeschwindigkeit der Oberfläche der Nitrifikationsanlage zwischen 0,17 und 0,48 von der Höhe der Nitrifikationsanlage Meter pro Minute liegt, und die Wasserfördermenge in Richtung Denitrifizierungs-Reaktor wird zwischen dem 9- und 1,2-fachen Inhalt des Denitrifizierungs-Reaktors pro Stunde eingestellt, wobei die Umströmungsgeschwindigkeit der Oberfläche des Denitrifizierungs-Reaktors zwischen 0,029 und 0,031 von der Höhe des Denitrifizierungs-Reaktors Meter pro Minute beträgt. Die Wassertemperatur wird im Bereich zwischen 11 und 28 Grad Celsius gehalten. Der Wasser-pH-Wert wird in einem Bereich zwischen 7,0 und 7,2 aufrechterhalten. Die Sauerstoffkonzentration im Wasser am Eintritt der Nitrifikationsanlage wird bei mindestens 4,4 mg/Liter gehalten, und die Sauerstoffkonzentration am Eintritt des Denitrifizierungs-Reaktors wird zwischen 0,9 und 1,2 mg/Liter gehalten. Das Wasser wird kontinuierlich mechanisch gefiltert. Das Frischwasser wird dabei von außen in einen Belüftungskanal mit einer Förderleistung zwischen dem 0,5- bis 0,9-fachen Inhalt der Nitrifikationsanlage pro Tag gefördert. Das Wasser wird mit UV-Licht mit einer Bestrahlungsintensität zwischen 40 und 90 mJ/cm$^2$ bestrahlt, wobei der UV-Wellenlängenbereich zwischen 205 und 315 Nanometer liegt. Der Wasser-pH-Wert wird dadurch angepasst, dass dem Wasser Lauge zugegeben wird.

Fig. 1

**Beschreibung**

Die Erfindung bezieht sich auf die Aquakultur, und zwar auf die gewerbliche Fischzucht, und kann zur Aufzucht von Speisefisch in Kreislaufanlagen angewendet werden.

Aus dem Stand der Technik ist ein Verfahren zur gewerblichen Fischzucht in Teichen mit stehendem Wasser bekannt (Patent RU 2368135, IPC: A01K 61/00, veröff. am 27.09.2009, Infoblatt Nr. 27). Dieses Verfahren umfasst das Aussetzen der Setzlinge für die einjährige oder mehrjährige Gewichtszunahme, die Wasserbelüftung, die Ansammlung und das Ausfischen (Fischfang) im Winter in der Belüftungszone. Im ersten Jahr werden wuchsfreudige Raubfische für die einjährige Gewichtszunahme in den Teich ausgesetzt. Am Ende der Gewichtszunahme werden die Fische mit dem restlichen nicht gefressenen "Fischunkraut" (wertlosen Fisch) mit einem engmaschigen Fischnetz nach dem Totalfangverfahren gefangen. Danach wird der Teich mit Larven von Peledmaräne, Karpfen und pflanzenfressenden Fischen für die ein- oder mehrjährige Gewichtszunahme besetzt.

Der Mangel des bekannten Verfahrens ist eine niedrige Gewichtszunahme pro Tag bei gewerblich gezüchteten Fischen.

Der nächstkommende Stand der Technik gegenüber dem beanspruchten Verfahren seinem technischen Wesen und dem erreichbaren Effekt nach ist das Fischzuchtverfahren in Fischbecken. Das Verfahren umfasst das Aussetzen von unterschiedlichen Aufzucht-Satzfischen in verschiedene Gruppen von Fischbecken, die Herstellung von bestimmten hydrochemischen Verhältnissen darin, die Fütterung und das Abfischen der marktfähigen Marktproduktion. Dabei werden die hydrochemischen Verhältnisse dadurch erzeugt, dass das 24 - 28° C warme Wasser mit einem spezifischen Wasserdurchfluss zwischen 70 und 80 m$^3$/Stunde pro 1 Tonne Marktproduktion in Bezug auf die Fischproduktions-Jahresleistung der Wirtschaft zugeführt wird. Der Wasserdurchfluss für verschiedene Gruppen von Fischbecken wird aus folgendem Verhältnis gewählt:

$$G_{sp.} = G_{Br.sp.} + G_{Setz.sp.} + G_{MP.sp.},$$

wobei

$G_{sp.}$ - der spezifische Wasserdurchfluss pro 1 Tonne Marktproduktion für die gesamte Wirtschaft,
$G_{Br.sp.}$ 0,315 $G_{sp.}$ - der spezifische Wasserdurchfluss in Fischbecken zur Brutaufzucht,
$G_{Setz.sp.}$ 0,315 $G_{sp.}$ - der spezifische Wasserdurchfluss in Fischbecken zur Setzling-Aufzucht für die Speisefischeinwaage und
$G_{MP.sp.}$ 0,37 $G_{sp.}$ - der spezifische Wasserdurchfluss in Fischbecken zur Aufzucht der Marktproduktion ist.

Diese technische Lösung ist in der Patentanmeldung RF 20606 56, IPC: A01 K 61/00, veröffentlicht 27.05.1996, offenbart und gilt als der nächste Stand der Technik gegenüber dem angemeldeten Verfahren und als Prototyp. Der Mangel des Prototyps ist die ungenügende tägliche Gewichtszunahme bei gewerblich (industriell) gezüchteten Fischen.

Die Aufgabe des vorliegenden Verfahrens ist die Entwicklung eines modernen ertragreichen Verfahrens zur gewerblichen (industriellen) Aufzucht von Speisefischen in Kreislaufanlagen, um den Markt mit Qualitätsfischproduktion zu sättigen und somit die Importsubstituierung wesentlich zu vereinfachen.

Der zu erwartende technische Effekt infolge der Nutzung des beanspruchten Verfahrens ist die Steigerung der täglichen Gewichtszunahme bei gewerblich gezüchteten Fischen.

Der angemeldete technische Effekt des Speisefischzuchtverfahrens in Kreislaufanlagen nach der ersten Ausgestaltung wird wie folgt erreicht. Die Fische werden in wassergefüllte Tanks für ihre Aufzucht ausgesetzt und regelmäßig unter Aufrechterhaltung von bestimmten Wasserparametern und Wasserversorgungskenndaten gefüttert. Dabei wird die Wasserfördermenge zur Nitrifikationsanlage zwischen dem 7- und 14-fachen Inhalt einer Nitrifikationsanlage pro Stunde eingestellt. Die Umströmungsgeschwindigkeit der Oberfläche der Nitrifikationsanlage liegt zwischen 0,17 und 0,48 von der Höhe der Nitrifikationsanlage Meter pro Minute. Die Wasserfördermenge in Richtung eines Denitrifizierungs-Reaktors wird zwischen dem 9- und 1,2-fachen Inhalt des Denitrifizierungs-Reaktors pro Stunde eingestellt. Die Umströmungsgeschwindigkeit der Oberfläche des Denitrifizierungs-Reaktors liegt zwischen 0,029 und 0,031 von der Höhe des Denitrifizierungs-Reaktors Meter pro Minute. Die Wassertemperatur wird dabei zwischen 11 und 28 Grad Celsius und der Wasser-pH-Wert zwischen 7,0 und 7,2 aufrechterhalten. Die Sauerstoffkonzentration im Wasser am Eintritt der Nitrifikationsanlage wird bei mindestens 4,4 mg/Liter und die Sauerstoffkonzentration am Eintritt des Denitrifizierungs-Reaktors wird zwischen 0,9 und 1,2 mg/Liter gehalten. Die Kohlendioxid-Konzentration im Wasser am Eintritt einer Hauptpumpe wird in einem Bereich von 15 bis 25 ml/Liter aufrechterhalten. Dabei wird eine kontinuierliche mechanische Wasserfilterung durchgeführt. Dabei wird das Frischwasser von außen in einen Belüftungskanal (Aerokanal) mit einer Leistung zwischen dem 0,5- und 0,9-fachen Inhalt der Nitrifikationsanlage pro Tag zugeführt.

Es ist vorteilhaft, dass das Wasser mit UV-Licht mit einer Bestrahlungsintensität zwischen 40 und 90 mJ/cm2 bestrahlt wird. Der UV-Wellenlängenbereich liegt zwischen 205 und 315 Nanometer.

Es ist vorteilhaft, dass der pH-Wert des Wassers durch Zugabe von Lauge in das Wasser angepasst wird.

Es ist vorteilhaft, dass die Sauerstoffkonzentration im Wasser mittels Wasserbelüftung erhöht wird.

Es ist vorteilhaft, dass die Kohlendioxid-Konzentration im Wasser mittels Wasserbelüftung vermindert wird.

Es ist vorteilhaft, dass das Wasser mit einem Boiler erwärmt ist.

Der angemeldete technische Effekt nach der zweiten Ausgestaltung wird wie folgt erreicht. Nach dem beanspruchten Speisefischzuchtverfahren in Kreislaufanlagen wird der Fisch in wassergefüllte Tanks zur Aufzucht ausgesetzt und regelmäßig unter Aufrechterhaltung von bestimmten vorgegebenen Wasserparametern und Wasserversorgungskenndaten gefüttert. Die genannten Haltungsbedingungen werden durch den Einsatz einer computergestützten Steuerung mit einer ASU-UZV-Software (automatisiertes Leittechniksystem für geschlossene Kreislaufanlagen) sichergestellt. Die Wasserfördermenge zur Nitrifikationsanlage wird dabei in einem Bereich zwischen dem 7- und 14-fachen Inhalt der Nitrifikationsanlage pro Stunde eingestellt. Die Umströmungsgeschwindigkeit der Oberfläche der Nitrifikationsanlage liegt zwischen 0,17 und 0,48 von der Höhe der Nitrifikationsanlage Meter pro Minute. Die Wasserfördermenge zum Denitrifizierungs-Reaktor wird zwischen dem 9-fachen und 1,2-fachen Inhalt des Denitrifizierungs-Reaktors pro Stunde eingestellt. Die Umströmungsgeschwindigkeit der Oberfläche des Denitrifizierungs-Reaktors liegt zwischen 0,029 und 0,031 von der Höhe des Denitrifizierungs-Reaktors Meter pro Minute. Dabei wird die Wassertemperatur in einem Wertebereich zwischen 11 und 28 Grad Celsius gehalten. Der Wasser-pH-Wert wird in einem Bereich von 7,0 bis 7,2 aufrechterhalten. Die Sauerstoffkonzentration im Wasser am Eintritt der Nitrifikationsanlage wird bei mindestens 4,4 mg/Liter gehalten. Die Sauerstoffkonzentration am Eintritt des Denitrifizierungs-Reaktors wird zwischen 0,9 und 1,2 mg/Liter gehalten. Die Kohlendioxid-Konzentration im Wasser an der Saugseite der Pumpe wird in einem Bereich von 15 bis 25 ml/Liter aufrechterhalten. Dabei wird eine kontinuierliche mechanische Wasserfilterung durchgeführt. Dabei wird das Frischwasser von außen in den Belüftungskanal (Aerokanal) mit einer Leistung zwischen dem 0,5-fachen und 0,9-fachen Inhalt der Nitrifikationsanlage pro Tag zugeführt.

Erfindungsgemäß ist es vorteilhaft, dass die Wasserparametersteuerung aufgrund der Messdaten von den Sensoren für Wasserstand, Wasserklarheit, Sauerstoffgehalt im Wasser, Kohlendioxidgehalt im Wasser, Wasser-pH und Wassertemperatur erfolgt.

Erfindungsgemäß ist es vorteilhaft, dass das Wasser mit UV-Licht mit einer Bestrahlungsintensität zwischen 40 und 90 mJ/cm$^2$ bestrahlt ist. Der UV-Wellenlängenbereich liegt zwischen 205 und 315 Nanometer.

Erfindungsgemäß ist es vorteilhaft, dass der pH-Wert des Wassers durch Zugabe von Lauge in das Wasser angepasst wird.

Erfindungsgemäß ist es vorteilhaft, dass die Sauerstoffkonzentration im Wasser mittels Wasserbelüftung erhöht wird.

Erfindungsgemäß ist es vorteilhaft, dass die Kohlendioxid-Konzentration im Wasser mittels Wasserbelüftung vermindert wird.

Erfindungsgemäß ist es vorteilhaft, dass das Wasser mit einem Boiler erwärmt ist.

Das beanspruchte Verfahren wird anhand der nachstehend aufgeführten Beispiele erklärt.

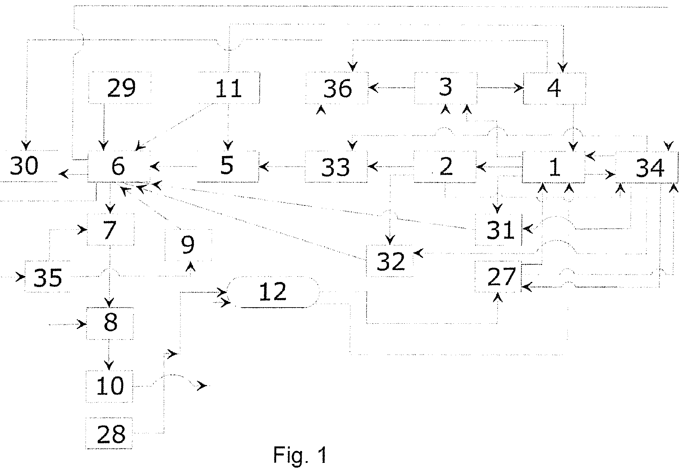

Um das beanspruchte Verfahren durchzuführen, wird eine aus dem Stand der Technik bekannte Einrichtung (insbesondere Einrichtung nach dem Gebrauchsmuster RU 153081 "Einrichtung zur Züchtung von Störfischen", veröff. am 10.07.2015, Infoblatt 19) verwendet (Fig. 1 bis 3).

Liste der Positionen und Bezugszeichen:

1. Wasser-Stabilisiertank
2. Mechanische Filterungseinheit
3. Biologische Wasseranreicherungseinheit
4. Denitrifikations-Biofilter
5. Nitrifikations-Biofilter
6. Belüftungskanal
7. UV-Bestrahlungseinheit
8. Boiler
9. Wasser-pH-Stabilisiereinheit
10. Hauptpumpe
11. Erster Luftverdichter
12. Erster Fischtank
13. Zweiter Fischtank

14. Dritter Fischtank
15. Vierter Fischtank
16. Fünfter Fischtank
17. Sechster Fischtank
18. Siebenter Fischtank
19. Achter Fischtank
20. Neunter Fischtank
21. Zehnter Fischtank
22. Elfter Fischtank
23. Zwölfter Fischtank
24. Dreizehnter Fischtank
25. Vierzehnter Fischtank
26. Fünfzehnter Fischtank
27. Wasserreservetank
28. Zweiter Luftverdichter
29. Frischwasserzugabe-Einheit
30. Abführungseinheit zur Abführung von Abwasser und Sedimenten aus der biologischen Wasseranreicherungseinheit des Denitrifikations-Biofilters und des Nitrifikations-Biofilters
31. Erster Verschluss
32. Zweiter Verschluss
33. Dritter Verschluss
34. Füllstandsautomatikeinheit
35. Wasserparameterüberwachungs- und -steuereinheit
36. Absaugpumpe zur Abförderung von Sedimenten aus der biologischen Wasseran- Reichungseinheit, dem Denitrifikations-Biofilter und dem Nitrifikations-Biofilter

Beispiel 1

Das beanspruchte Verfahren wurde in der aus dem Stand der Technik bekannten geschlossenen Kreislaufanlage zur Aufzucht von Fischen durchgeführt. Die Grundausführung der geschlossenen Kreislaufanlage ist in Fig. 1 dargestellt (Gebrauchsmuster RU 153081, Veröffentlichungsdatum 10.07.2015, Infoblatt Nr. 19). Die geschlossene Kreislaufanlage enthält einen Wasser-Stabilisiertank 1, eine mechanische Filterungseinheit 2, eine biologische Wasseranreicherungseinheit 3, einen Denitrifikations-Biofilter 4, einen Nitrifikations-Biofilter 5, einen Belüftungskanal 6, eine UV-Bestrahlungseinheit 7, einen Boiler 8, eine Wasser-pH-Stabilisiereinheit 9, eine Hauptpumpe 10, einen ersten Luftverdichter 11, einen Fischtank 12, einen Wasserreservetank 27, einen zweiten Luftverdichter 28, eine Frischwasserzugabe-Einheit 29, eine Abführungseinheit 30 zur Abführung von Abwasser und Sedimenten aus der biologischen Wasseranreicherungseinheit des Denitrifikations-Biofilters und des Nitrifikations-Biofilters, einen ersten Verschluss 31, einen zweiten Verschluss 32, einen dritten Verschluss 33, eine Füllstandautomatikeinheit 34, eine Wasserparameterüberwachungs- und -steuereinheit 35 und eine Absaugpumpe 36 zur Abförderung von Sedimenten aus der biologischen Wasseranreicherungseinheit, dem Denitrifikations-Biofilter und dem Nitrifikations-Biofilter.

Der Fischtank war 655,7 m$^3$ groß und wurde zu 84% mit Wasser gefüllt. Der Wasserstand in der benutzten Anlage wurde durch die Füllstandautomatikeinheit aufrechterhalten. Der Nitrifikations-Biofilter hatte einen Inhalt von 64,8 m$^3$ und war 2,7 Meter hoch. Der Denitrifikations-Biofilter hatte einen Inhalt von 5,5 m$^3$ und war 5 Meter hoch.

Die genannte geschlossene Kreislaufanlage wurde mit Frischwasser (GOST 2874-82, Trinkwasser) aus einer Frischwasserzugabe-Einheit vorgefüllt. Dieses Frischwasser wurde zuerst über den Boiler in den Belüftungskanal gefördert. Der pH-Wert wurde im genannten Belüftungskanal mittels der Wasser-pH-Stabilisiereinheit auf 7,2 dadurch gebracht, dass das Wasser mit einer entsprechenden Menge Lauge ergänzt wurde. Danach wurde die Oberfläche des fließenden Wassers in einer UV-Bestrahlungseinheit mit UV-Licht bei einer Wellenlänge von 315 nm mit einer Bestrahlungsintensität von 40 mJ/cm$^2$ bestrahlt.

Das Frischwasser im Boiler wurde auf 26° C erwärmt und in den Belüftungskanal gefördert. Danach floss das Wasser in die Hauptpumpe. Die Hauptpumpe förderte das Wasser zum Eintritt des Fischtanks. Die Frischwasserförderleistung der Hauptpumpe zum Fischtank wurde so eingestellt, dass das Frischwasser über den Nitrifikations-Biofilter aufgrund der Bedingung 8,5-facher Inhalt des Nitrifikations-Biofilters pro Stunde floss, d. h. die Förderleistung lag bei 550,8 m$^3$/Stunde. Dabei betrug die Umströmungsgeschwindigkeit der Oberfläche des Nitrifikations-Biofilters 0,67 m/Min. Dementsprechend wurde die Wasserzufuhr in den Denitrifikations-Biofilter aufgrund der Bedingung 1,0-facher Inhalt des Denitrifikations-Biofilters pro Stunde, das heißt auf 5,5 m$^3$/Stunde, eingestellt. In diesem Fall betrug die Umströmungsgeschwindigkeit der Oberfläche des Denitrifikations-Biofilters 0,15 m/Min.

Um eine Sauerstoffkonzentration im Wasser aufrechtzuerhalten, wird der erste Luftverdichter eingesetzt. Durch den genannten Luftverdichter wird die Sauerstoffkonzentration im Wasser am Eintritt des Nitrifikations-Biofilters auf mindestens 4,4 mg/Liter eingestellt. Die Sauerstoffkonzentration am Eintritt des Denitrifikations-Biofilters wird bei 1,2 mg/Liter aufrechterhalten und zwar dadurch, dass die Funktion der biologischen Wasseranreicherungseinheit gesteuert wird.

Die benötigte Kohlendioxid-Konzentration im Wassermedium wurde mit Hilfe des ersten und des zweiten Luftverdichters gehalten. Die genannten Luftverdichter sorgten für die Kohlendioxid-Konzentration bei 18 mg/Liter im Wasser am Eintritt der Hauptpumpe.

Nach der mechanischen Filterung fließt der größte Teil des Wassers über den dritten Verschluss in den Nitrifikations-Biofilter. Das sedimenthaltige Wasser kommt in die biologische Anreicherungseinheit. Von da aus wird das sedimenthaltige Wasser in eine Abführungseinheit abgepumpt. Folglich hat die eingesetzte Anlage Wasserverluste, die dadurch ausgeglichen werden, dass das Wasser aus der Frischwasserzugabe-Einheit in den Belüftungskanal über den Boiler gefördert wird. Die Förderleistung beträgt dabei den 0,5-fachen Inhalt der Nitrifikationsanlage pro Tag, das heißt 32,4 m$^3$/Tag.

Die eingesetzte Anlage wurde in einem 6 Stunden langen Probelauf mit den genannten Parametern betrieben. Danach waren stabile Betriebszustände der Füllstandautomatikeinheit und der Wasserparameterüberwachungs- und -steuereinheit erreicht. Nun wurde der Fischtank mit einjähriger Brut besetzt. Bei dieser Brut handelte es sich um eine Hybride aus dem russischen Stör und dem sibirischen Stör in durchschnittlicher Einwaage von 1,8 kg und mit einer Besatzdichte von 7 kg/m$^3$.

Nach der Besetzung des Fischtanks mit 2185 Hybriden aus den russischen und den sibirischen Stören in durchschnittlicher Einwaage von 1,8 kg (Besatzdichte 7 kg/m$^3$) wurden die Setzlinge alle 120 Minuten gefüttert, wobei das Futtergewicht im Verhältnis 0,61% des gesamten Fischgewichts im Fischtank pro 24 Stunden bestimmt wurde. Die Aktualisierung der dem Fisch zugeführten Futtermenge wurde alle 30 Tage vorgenommen. Bei dem Futter handelte es sich um Extrudate mit einem Rohproteingehalt von 48% und einem Fettgehalt von 12%. Beim Prototyp wurden 2196 Stück Hybride aus dem russischen Stör und dem sibirischen Stör in durchschnittlicher Einwaage von 1,8 kg (Besatzdichte 7 kg/m$^3$) zur Besetzung verwendet. Die Setzlinge wurden alle 120 Minuten gefüttert, wobei das Futtergewicht 0,61% des gesamten Fischgewichts im Fischtank pro 24 Stunden betrug. Die Aktualisierung der dem Fisch zugeführten Futtermenge wurde alle 30 Tage vorgenommen. Bei dem Futter handelte es sich um Extrudate mit einem Rohproteingehalt von 48% und einem Fettgehalt von 12%.

Die Vergleichsdaten zum Prototyp wurden nach Ablauf von 12 Monaten bewertet und sind in Tabelle 1 angeführt.

Tabelle 1

| Fischaufzuchtverfahren | Zuchtdauer, Monate | Ursprüngliches Fischgewicht im Tank nach der Besetzung, kg | Fischendgewicht im Tank, kg | Gemittelte tägliche Gewichtszunahme umgerechnet auf einen Fisch*, g | Anmerkung |
|---|---|---|---|---|---|
| Beanspruchtes Verfahren | 12 | 3933 | 10531 | 8,4 | Fischverlust während der Zucht: 142 Stück |
| Prototyp-Verfahren | 12 | 3953 | 7087 | 4,5 | Fischverlust während der Zucht: 264 Stück |
| *Zur Mittelung der täglichen Gewichtszunahme umgerechnet auf einen Fisch wurde eine monatliche willkürliche Stichprobe in der Menge von 50 Stück angewendet. | | | | | |

Aus der Tabelle geht hervor, dass das beanspruchte Fischaufzuchtverfahren für Kreislaufanlagen den angemeldeten technischen Effekt im Vergleich zum Prototyp-Verfahren zweifellos sicherstellt.

Beispiel 2

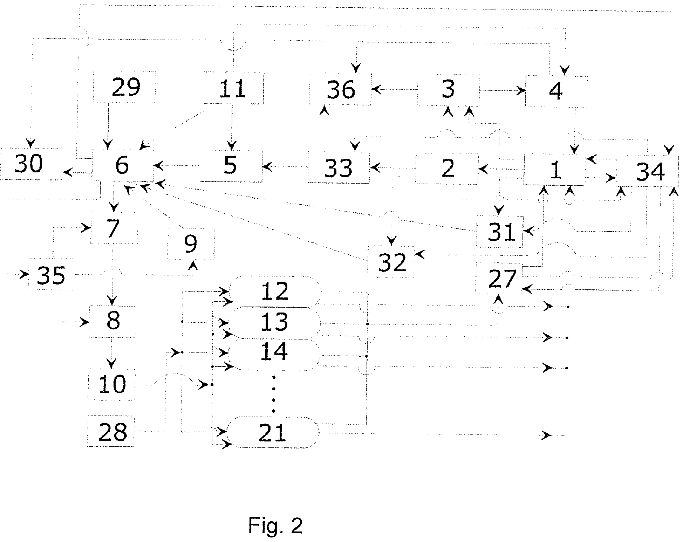

Das beanspruchte Fischaufzuchtverfahren wurde in der aus dem Stand der Technik bekannten geschlossenen Kreislaufanlage durchgeführt. Die Grundausführung der geschlossenen Kreislaufanlage ist in Fig. 2 dargestellt. Die geschlossene Kreislaufanlage enthält einen Wasser-Stabilisiertank 1, eine mechanische Filterungseinheit 2, eine biologische Anreicherungseinheit 3, einen Denitrifikations-Biofilter 4, einen Nitrifikations-Biofilter 5, einen Belüftungskanal 6, eine UV-Bestrahlungseinheit 7, einen Boiler 8, eine Wasser-pH-Stabilisiereinheit 9, eine Hauptpumpe 10, einen ersten Luftverdichter 11, Fischtanks 12 bis 21, einen Wasserreservetank 27, einen zweiten Luftverdichter 28, eine Frischwasserzugabe-Einheit 29, eine Abführungseinheit 30 zur Abführung von Abwasser und Sedimenten aus der biologischen Wasseranreicherungseinheit, dem Denitrifikations-Biofilter und dem Nitrifikations-Biofilter, einen ersten Verschluss 31, einen zweiten Verschluss 32, einen dritten Verschluss 33, eine Füllstandautomatikeinheit 34, eine Wasserparameterüberwachungs- und - steuereinheit 35 und eine Absaugpumpe 36 zur Abförderung von Sedimenten aus der biologischen Wasseranreicherungseinheit, dem Denitrifikations-Biofilter und dem Nitrifikations-Biofilter.

Der Gesamtinhalt von zehn Fischtanks beträgt 1200 m³. Dieser Inhalt wird zu 80% mit Wasser gefüllt. Der Wasserstand in der eingesetzten Anlage wird durch die Füllstandautomatikeinheit aufrechterhalten. Der Nitrifikations-Biofilter hat einen Inhalt von 96 m³ und ist 3 Meter hoch. Der Denitrifikations-Biofilter hat einen Inhalt von 8,6 m³ und ist 4 Meter hoch.

Die genannte geschlossene Kreislaufanlage wird mit Frischwasser (GOST 2874-82, Trinkwasser) aus der Frischwasserzugabe-Einheit vorgefüllt. Das Frischwasser wird dabei direkt dem Belüftungskanal zugeführt. Der pH-Wert im genannten Belüftungskanal wird auf 7,1 mittels der Wasser-pH-Stabilisiereinheit dadurch gebracht, dass das Wasser mit einer entsprechenden Menge Lauge ergänzt wird. Danach wird die Oberfläche des fließenden Wassers in der UV-Bestrahlungseinheit mit UV-Licht bestrahlt. Die Wellenlänge beträgt 290 nm, und die Bestrahlungsintensität ist 45 mJ/cm².

Das aus dem Aerokanal in den Boiler fließende Wasser wird im Boiler auf 14° C erwärmt und in den Belüftungskanal rückgeführt. Danach fließt das Wasser in die Hauptpumpe. Durch die Hauptpumpe wird das Wasser an den Eintritt der Fischtanks gefördert. Die Förderleistung der Hauptpumpe in Richtung Fischtanks wird so eingestellt, dass der Wasserdurchsatz über den Nitrifikations-Biofilter dem 10-fachen Inhalt des Nitrifikations-Biofilters pro Stunde gleich ist, d. h. 960 m³/Stunde beträgt. Dabei beträgt die Umströmungsgeschwindigkeit der Oberfläche des Nitrifikations-Biofilters 0,88 m/Min. Dementsprechend wird die Wasserzufuhr in den Denitrifikations-Biofilter aufgrund der Bedingung des 0,8-fachen Inhalts des Denitrifikations-Biofilters pro Stunde, d. h. 6,9 m³/Stunde, vorgegeben. In diesem Fall beträgt die Umströmungsgeschwindigkeit der Oberfläche des Denitrifikations-Biofilters 0,09 m/Min.

Um eine bestimmte Sauerstoffkonzentration im Wasser der eingesetzten Kreislaufanlage aufrechtzuerhalten, wird der erste Luftverdichter eingesetzt. Durch den genannten Luftverdichter wird die Sauerstoffkonzentration im Wasser am Eintritt des Nitrifikations-Biofilters auf mindestens 4,8 mg/Liter eingestellt. Die Sauerstoffkonzentration am Eintritt des Denitrifikations-Biofilters wird bei 0,9 mg/Liter aufrechterhalten, indem die Funktion der biologischen Wasseranreicherungseinheit gesteuert wird.

Die benötigte Kohlendioxid-Konzentration im Wassermedium der eingesetzten Kreislaufanlage wird mit Hilfe des ersten und des zweiten Luftverdichters gehalten. Die genannten Luftverdichter sorgen für die Kohlendioxid-Konzentration von 20 ml/Liter im Wasser am Eintritt der Hauptpumpe.

Nach der mechanischen Filterung fließt der größte Teil des Wassers über den dritten Verschluss in den Nitrifikations-Biofilter. Das sedimenthaltige Wasser kommt in die biologische Anreicherungseinheit. Von da aus wird das sedimenthaltige Wasser in die Abführungseinheit abgepumpt. Folglich hat die eingesetzte Anlage Wasserverluste, die dadurch ausgeglichen werden, dass das Wasser aus der Frischwasserzugabe-Einheit in den Belüftungskanal über den Boiler gefördert wird. Die FrischwasserFörderleistung beträgt dabei den 0,7-fachen Inhalt der Nitrifikationsanlage pro Tag, das heißt 67,2 m³/Tag.

Die eingesetzte Anlage wird in einem 5 Stunden langen Probelauf mit den genannten Parametern betrieben. In diesem Zeitraum werden stabile Betriebszustände der Füllstandautomatikeinheit und der Wasserparameterüberwachungs- und -steuereinheit erreicht. Danach werden die Fischtanks mit halbjährigen Regenbogenforellen in durchschnittlicher Einwaage von 0,15 kg mit einer Besatzdichte von 13 kg/m³ besetzt.

Nach der Besetzung von 10 Fischtanks mit 84560 Stück Regenbogenforellen in durchschnittlicher Einwaage von 0,15 kg (Besatzdichte 13 kg/m³) werden die Fische alle 60 Minuten gefüttert. Das Futtergewicht wird im Verhältnis 2,57% des gesamten Fischgewichts im Fischbecken pro 24 Stunden bestimmt. Die Aktualisierung der dem Fisch zugeführten Futtermenge wird alle 30 Tage vorgenommen. Als Nahrung werden Extrudate mit einem Rohproteingehalt von 49% und einem Fettgehalt von 17% verwendet. Nach dem Prototypverfahren werden die Fischtanks ebenfalls mit 84700 Stück Regenbogenforellen in durchschnittlicher Einwaage von 0,15 kg (Besatzdichte 13 kg/m³) besetzt. Die Fütterung erfolgt alle 60 Minuten, wobei die Futtermasse im Verhältnis 2,57% des gesamten Fischgewichts im Fischbecken pro 24 Stunden bestimmt wird. Die Aktualisierung der dem Fisch zugeführten Futtermenge wird alle 30 Tage vorgenommen. Als Nahrung werden Extrudate mit einem Rohproteingehalt von 49% und einem Fettgehalt von 18% verwendet.

Die Vergleichsdaten zwischen dem beanspruchten und dem Prototypverfahren wurden nach Ablauf von 6 Monaten bewertet und sind Tabelle 2 entnehmbar.

Tabelle 2

| Fischaufzuchtverfahren | Zuchtdauer, Monate | Ursprüngliches Fischgewicht in 10 Tanks nach der Besetzung, kg | Fischendgewicht in Tanks, kg | Gemittelte tägliche Gewichtszunahme umgerechnet auf einen Fisch*, g | Anmerkung |
|---|---|---|---|---|---|
| Beanspruchtes Verfahren | 6 | 12680 | 72311 | 4,94 | Fischverlust während der Zucht: 4205 Stück |
| Prototyp-Verfahren | 6 | 12713 | 48759 | 2,55 | Fischverlust während der Zucht: 6201 Stück |

*Zur Mittelung der täglichen Gewichtszunahme umgerechnet auf einen Fisch wurde eine monatliche willkürliche Stichprobe in der Menge von 40 Stück Fisch angewendet.

Aus der Tabelle 2 ist ersichtlich, dass das beanspruchte Verfahren zur Aufzucht von Regenbogenforellen in Kreislaufanlagen den angemeldeten technischen Effekt im Vergleich zum Prototyp-Verfahren erreicht.

Beispiel 3

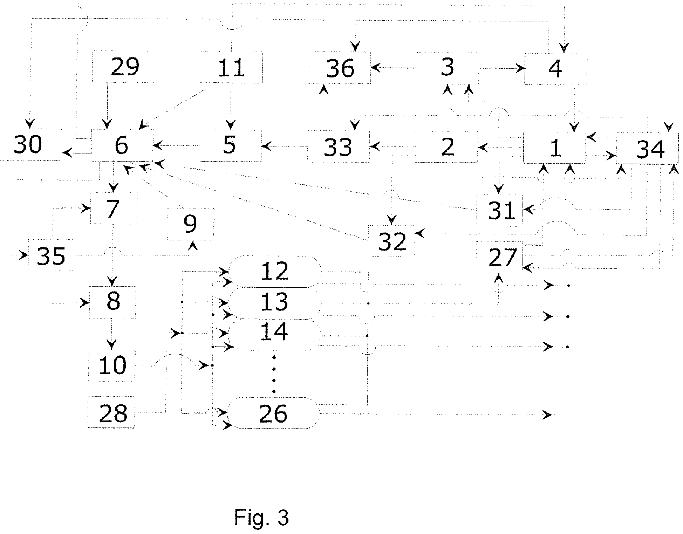

Das beanspruchte Fischaufzuchtverfahren wurde in der aus dem Stand der Technik bekannten geschlossen Kreislaufanlage durchgeführt. Die Grundausführung der geschlossenen Kreislaufanlage ist in Fig. 3 dargestellt. Die geschlossene Kreislaufanlage enthält einen Wasser-Stabilisiertank 1, eine mechanische Filterungseinheit 2, eine biologische Anreicherungseinheit 3, einen Denitrifikations-Biofilter 4, einen Nitrifikations-Biofilter 5, einen Belüftungskanal 6, eine UV-Bestrahlungseinheit 7, einen Boiler 8, eine Wasser-pH-Stabilisiereinheit 9, eine Hauptpumpe 10, einen ersten Luftverdichter 11, Fischtanks 12 - 26, einen Wasserreservetank 27, einen zweiten Luftverdichter 28, eine Frischwasserzugabe-Einheit 29, eine Abführungseinheit 30 zur Abführung von Abwasser und Sedimenten aus der biologischen Wasseranreicherungseinheit, dem Denitrifikations-Biofilter und dem Nitrifikations-Biofilter, einen ersten Verschluss 31, einen zweiten Verschluss 32, einen dritten Verschluss 33, eine Füllstandautomatikeinheit 34, eine Wasserparameterüberwachungs- und - steuereinheit 35 und eine Absaugpumpe 36 zur Abförderung von Sedimenten aus der biologischen Wasseranreicherungseinheit, dem Denitrifikations-Biofilter und dem Nitrifikations-Biofilter.

Der Gesamtinhalt von fünfzehn Fischtanks beträgt 1938 m³. Dieser Inhalt wird zu 80% mit Wasser gefüllt. Der Wasserstand in der eingesetzten Anlage wird durch die Füllstandautomatikeinheit aufrechterhalten. Der Nitrifikations-Biofilter hat einen Inhalt von 124 m³ und ist 3,4 Meter hoch. Der Denitrifikations-Biofilter hat einen Inhalt von 13,5 m³ und ist 4,5 m hoch.

Die genannte geschlossene Kreislaufanlage wird mit Frischwasser (GOST 2874-82, Trinkwasser) aus der Frischwasserzugabe-Einheit vorgefüllt. Das Frischwasser wird dabei direkt dem Belüftungskanal zugeführt. Der pH-Wert im genannten Belüftungskanal wird auf 7,0 mittels der Wasser-pH-Stabilisiereinheit dadurch gebracht, dass das Wasser mit einer entsprechenden Menge Lauge ergänzt wird. Danach wird die Oberfläche des fließenden Wassers in der UV-Bestrahlungseinheit mit UV-Licht bestrahlt. Die Wellenlänge beträgt 260 nm, und die Bestrahlungsintensität beträgt 55 mJ/cm².

Das aus dem Aerokanal in den Boiler fließende Wasser wird im Boiler auf 22° C erwärmt und in den Belüftungskanal rückgeführt. Danach fließt das Wasser in die Hauptpumpe. Die Hauptpumpe fördert das Wasser an den Eintritt der Fischtanks. Die Förderleistung der Hauptpumpe in Richtung Fischtanks wird so eingestellt, dass der Wasserdurchsatz über den Nitrifikations-Biofilter dem 12,5-fachen Inhalt des Nitrifikations-Biofilters pro Stunde, d. h. 1550 m³/Stunde, gleich ist. Dabei beträgt die Umströmungsgeschwindigkeit der Oberfläche des Nitrifikations-Biofilters 1,25 m/Min. Dementsprechend wird die Wasserzufuhr in den Denitrifikations-Biofilter aufgrund der Bedingung des 0,9-fachen Inhalts des Denitrifikations-Biofilters pro Stunde, d. h. 12,1 m³/Stunde, vorgegeben. In diesem Fall beträgt die Umströmungsgeschwindigkeit der Oberfläche des Denitrifikations-Biofilters 0,12 m/Min.

Um eine bestimmte Sauerstoffkonzentration im Wasser der eingesetzten Kreislaufanlage aufrechtzuerhalten, wird der erste Luftverdichter eingesetzt. Anhand des genannten Luftverdichters wird die Sauerstoffkonzentration im Wasser am Eintritt des Nitrifikations-Biofilters auf mindestens 4,6 mg/Liter eingestellt. Die Sauerstoffkonzentration am Eintritt des Denitrifikations-Biofilters wird bei 1,0 mg/Liter aufrechterhalten, indem die Funktion der biologischen Wasseranreicherungseinheit gesteuert wird.

Die benötigte Kohlendioxid-Konzentration im Wassermedium der eingesetzten Kreislaufanlage wird mit Hilfe des ersten und des zweiten Luftverdichters gehalten. Die genannten Luftverdichter sorgen für die Kohlendioxid-Konzentration von 16 ml/Liter im Wasser am Eintritt der Hauptpumpe.

Nach der mechanischen Filterung fließt der größte Teil des Wassers über den dritten Verschluss in den Nitrifikations-Biofilter. Das sedimenthaltige Wasser kommt in die biologische Wasseranreicherungseinheit. Von da aus wird das sedimenthaltige Wasser in die Abführungseinheit abgepumpt. Folglich hat die eingesetzte Anlage Wasserverluste, die dadurch ausgeglichen werden, dass das Wasser aus der Frischwasserzugabe-Einheit in den Belüftungskanal über den Boiler gefördert wird. Die Frischwasser-Förderleistung beträgt dabei den 0,8-fachen Inhalt der Nitrifikationsanlage pro Tag, d. h. 99,2 m³/Tag.

Die eingesetzte Anlage wird in einem 7 Stunden langen Probelauf mit genannten Parametern betrieben. In diesem Zeitraum werden stabile Betriebszustände der Füllstandautomatikeinheit und der Wasserparameterüberwachungs- und -steuereinheit erreicht. Danach werden die Fischtanks mit Karpfen in durchschnittlicher Einwaage von 0,1 kg mit einer Besatzdichte von 34 kg/m³ besetzt.

Nach der Besetzung von 15 Fischtanks mit 532500 Stück Karpfen in durchschnittlicher Einwaage von 0,1 kg (Besatzdichte 34 kg/m³) werden die Setzlinge alle 60 Minuten gefüttert, wobei das Futtergewicht im Verhältnis 4,5% des gesamten Fischgewichts im Fischbecken pro 24 Stunden bestimmt wird. Die Aktualisierung der dem Fisch zugeführten Futtermenge wird alle 30 Tage vorgenommen. Als Nahrung werden Extrudate mit Rohproteingehalt von 45% und Fettgehalt von 14% verwendet. Nach dem Prototypverfahren werden die Fischtanks ebenfalls mit 540350 Stück Karpfen in durchschnittlicher Einwaage von 0,1 kg (Besatzdichte 34 kg/m³) besetzt. Die Fütterung erfolgt alle 60 Minuten, wobei die Futtermasse im Verhältnis 4,5% des gesamten Fischgewichts im Fischbecken pro 24 Stunden ermittelt wird. Die Aktualisierung der den Karpfen zugeführten Futtermenge wird alle 30 Tage vorgenommen. Als Nahrung werden Extrudate mit einem Rohproteingehalt von 45% und einem Fettgehalt von 14% verwendet.

Die Vergleichsdaten zwischen dem beanspruchten und dem Prototypverfahren wurden nach Ablauf von 6 Monaten bewertet und sind Tabelle 3 entnehmbar.

Tabelle 3

| Fischaufzuchtverfahren | Zuchtdauer, Monate | Ursprüngliches Fischgewicht in 15 Tanks nach der Besetzung, kg | Fischendgewicht in Tanks, kg | Gemittelte tägliche Gewichtszunahme umgerechnet auf einen Fisch*, g | Anmerkung |
|---|---|---|---|---|---|
| Beanspruchtes Verfahren | 4 | 53240 | 240138 | 4,16 | Fischverlust während der Zucht: 52482 Stück |
| Prototyp-Verfahren | 4 | 30750 | 130742 | 2,34 | Fischverlust während der Zucht: 73411 Stück |
| *Zur Mittelung der täglichen Gewichtszunahme umgerechnet auf einen Fisch wurde eine monatliche willkürliche Stichprobe in der Menge von 45 Stück Karpfen angewendet. | | | | | |

Aus der Tabelle 3 ist ersichtlich, dass das beanspruchte Verfahren zur Aufzucht von Karpfen in Kreislaufanlagen den angemeldeten technischen Effekt im Vergleich zum Prototyp-Verfahren erreicht.

Beispiel 4

Das beanspruchte Fischaufzuchtverfahren wurde in der aus dem Stand der Technik bekannten geschlossenen Kreislaufanlage durchgeführt. Die Grundausführung der geschlossenen Kreislaufanlage ist in Fig. 1 dargestellt. Die geschlossene Kreislaufanlage enthält einen Wasser-Stabilisiertank 1, eine mechanische Filterungseinheit 2, eine biologische Anreicherungseinheit 3, einen Denitrifikations-Biofilter 4, einen Nitrifikations-Biofilter 5, einen Belüftungskanal 6, eine UV-Bestrahlungseinheit 7, einen Boiler 8, eine Wasser-pH-Stabilisiereinheit 9, eine Hauptpumpe 10, einen ersten Luftverdichter 11, einen Fischtank 12, einen Wasserreservetank 27, einen zweiten Luftverdichter 28, eine Frischwasserzugabe-Einheit 29, eine Abführungseinheit 30 zur Abführung von Abwasser und Sedimenten aus der biologischen Wasseranreicherungseinheit, dem Denitrifikations-Biofilter und dem Nitrifikations-Biofilter, einen ersten Verschluss 31, einen zweiten Verschluss 32, einen dritten Verschluss 33, eine Füllstandautomatikeinheit 34, eine Wasserparameterüberwachungs- und - steuereinheit 35 und eine Absaugpumpe 36 zur Abförderung von Sedimenten aus der biologischen Wasseranreicherungseinheit, dem Denitrifikations-Biofilter und dem Nitrifikations-Biofilter.

Der Gesamtinhalt des Fischtanks beträgt 669,6 m$^3$ und wird zu 84% mit Wasser gefüllt. Der Wasserstand in der benutzten Anlage wird durch die Füllstandautomatikeinheit aufrechterhalten. Der Nitrifikations-Biofilter hat einen Inhalt von 75 m$^3$ und ist 2,5 Meter hoch. Der Denitrifikations-Biofilter hat einen Inhalt von 7 m$^3$ und ist 3,2 Meter hoch.

Die benutzte geschlossene Kreislaufanlage wird mit Frischwasser (GOST 2874-82, Trinkwasser) aus der Frischwasserzugabe-Einheit vorgefüllt. Dieses Frischwasser wird zuerst über den Boiler in den Belüftungskanal gefördert. Der pH-Wert im genannten Belüftungskanal wird bei 7,1 aufrechterhalten. Die pH-Wert-Haltung erfolgt durch die Wasser-pH-Stabilisiereinheit aufgrund der Messdaten eines pH-Sensors und dank der Anwendung einer ASU-UZV-Software (automatisiertes Leittechniksystem für geschlossene Kreislaufanlagen, weiter ASU-UZV-Software, Urkunde über die staatliche Registrierung eines Computerprogramms "ASU-UZV" RU 2015618912, Registrierungsdatum 19.08.2015). Das Programm wird auf einem IBM-kompatiblen Personalcomputer installiert. Die Konstanthaltung des pH-Werts wird dadurch erreicht, dass das Wasser mit einer entsprechenden Menge Lauge ergänzt wird. Danach bestrahlt die UV-Bestrahlungseinheit die Oberfläche des fließenden Wassers mit UV-Licht aufgrund der Daten eines Wasserklarheitssensors und der ASU-UZV-Software. Die Wellenlänge beträgt 285 nm, und die Bestrahlungsintensität liegt bei 46 mJ/cm$^2$.

Der Boiler wird mit Frischwasser gefüllt, das aus der Frischwasserzugabe-Einheit kommt. Das Frischwasser im Fischtank wird durch die ASU-UZV-Software aufgrund der Messdaten eines Wassertemperatursensors auf konstant 25° C erwärmt. Dieses Wasser wird dann in den Belüftungskanal gefördert. Danach fließt das Wasser in die Hauptpumpe. Durch die Hauptpumpe wird das Wasser an den Eintritt des Fischtanks gefördert. Die Frischwasserförderleistung der Hauptpumpe zum Fischtank wird so eingestellt, dass der Wasserdurchsatz über den Nitrifikations-Biofilter dem 7,5-fachen Inhalt des Nitrifikations-Biofilters pro Stunde, d. h. 562,5 m$^3$/Stunde, gleich ist. Dabei beträgt die Umströmungsgeschwindigkeit der Oberfläche des Nitrifikations-Biofilters 0,55 m/Min. Dementsprechend wird die Wasserzufuhr in den Denitrifikations-Biofilter aufgrund der Bedingung des 0,9-fachen Inhalts des Denitrifikations-Biofilters pro Stunde, d. h. 6,3 m$^3$/Stunde, vorgegeben. In diesem Fall beträgt die Umströmungsgeschwindigkeit der Oberfläche des Denitrifikations-Biofilters 0,08 m/Min.

Die Aufrechterhaltung der benötigten Sauerstoffkonzentration im Wassermedium der für die Durchführung des beanspruchten Verfahrens eingesetzten Anlage erfolgt durch die ASU-UZV-Software aufgrund der Messdaten vom Sauerstoffsensor. Die ASU-UZV-Software steuert die Leistung des ersten Luftverdichters. Der genannte Luftverdichter hält die Sauerstoffkonzentration im Wasser am Eintritt des Nitrifikations-Biofilters auf min. 5,1 mg/Liter. Die ASU-UZV-Software steuert die Funktion der biologischen Wasseranreicherungseinheit aufgrund der Messdaten eines Sauerstoffsensors, so dass die Sauerstoffkonzentration am Eintritt des Denitrifikations-Biofilters auf 1,1 mg/Liter gehalten wird.

Die Aufrechterhaltung der benötigten Kohlendioxid-Konzentration im Wassermedium der für die Durchführung des beanspruchten Verfahrens eingesetzten Anlage erfolgt ebenfalls durch die ASU-UZV-Software (automatisiertes Leittechniksystem für geschlossene Kreislaufanlagen) aufgrund der Messdaten eines Kohlendioxidsensors. Die ASU-UZV-Software steuert die Leistungen sowohl des ersten als auch des zweiten Luftverdichters. Die genannten Luftverdichter halten die Kohlendioxid-Konzentration im Wasser am Eintritt der Hauptpumpe bei 15 ml/Liter.

Nach der mechanischen Filterung fließt der größte Teil des Wassers über den dritten Verschluss in den Nitrifikations-Biofilter. Das sedimenthaltige Wasser kommt in die biologische Anreicherungseinheit. Von da aus wird das sedimenthaltige Wasser in die Abführungseinheit abgepumpt. Folglich hat die eingesetzte Anlage Wasserverluste, die dadurch ausgeglichen werden, dass das Wasser aus der Frischwasserzugabe-Einheit in den Belüftungskanal über den Boiler in der Menge von 0,6-fachem Inhalt der Nitrifikationsanlage pro Tag, d. h. 45 m$^3$/Tag, gefördert wird.

Die eingesetzte Anlage wird in einem 7 Stunden langen Probelauf mit genannten Parametern betrieben. In diesem Zeitraum werden stabile Betriebszustände der Füllstandautomatikeinheit und der Wasserparameterüberwachungs- und -steuereinheit erreicht. Danach wird der Fischtank mit dem anderthalbjährigen sibirischen Stör in durchschnittlicher Einwaage von 2,7 kg mit einer Besatzdichte von 32 kg/m$^3$ besetzt.

Nach der Besetzung des Fischtanks mit 6620 Stück sibirischen Störs in durchschnittlicher Einwaage von 2,7 kg (Besatzdichte 31,8 kg/m$^3$) werden die Setzlinge alle 180 Minuten gefüttert. Das Futtergewicht wird aus dem Verhältnis 0,56% des gesamten Fischgewichts im Fischbecken pro 24 Stunden bestimmt. Die Aktualisierung der dem Fisch zugeführten Futtermenge wird alle 30 Tage vorgenommen. Als Nahrung werden Extrudate mit einem Rohproteingehalt von 45% und einem Fettgehalt von 6% verwendet. Nach dem Prototypverfahren wird der Fischtank ebenfalls mit 6500 Stück sibirischen Störs in durchschnittlicher Einwaage von 2,7 kg (Besatzdichte 31,2 kg/m$^3$) besetzt. Die Fische werden alle 180 Minuten gefüttert, wobei das Futtergewicht aus dem Verhältnis 0,56% des gesamten Fischgewichts im Fischbecken pro 24 Stunden bestimmt wird. Die Aktualisierung der dem Fisch zugeführten Futtermenge wird alle 30 Tage vorgenommen. Bei der Nahrung handelt es sich im Prototyp-Verfahren um Extrudate mit einem Rohproteingehalt von 45% und einem Fettgehalt von 6%.

Die Vergleichsdaten zwischen dem beanspruchten und dem Prototypverfahren wurden nach Ablauf von 8 Monaten bewertet und sind in Tabelle 4 aufgeführt.

Tabelle 4

| Fischaufzuchtverfahren | Zuchtdauer, Monate | Ursprüngliches Fischgewicht im Tank nach der Besetzung, kg | Fischendgewicht im Tank, kg | Gemittelte tägliche Gewichtszunahme umgerechnet auf einen Fisch*, g | Anmerkung |
|---|---|---|---|---|---|
| Beanspruchtes Verfahren | 8 | 17874 | 33762 | 10,3 | Fischverlust während der Zucht: 212 Stück |
| Prototyp-Verfahren | 8 | 17550 | 23250 | 4,0 | Fischverlust während der Zucht: 531 Stück |
| *Zur Mittelung der täglichen Gewichtszunahme umgerechnet auf einen Fisch wurde eine monatliche willkürliche Stichprobe in der Menge von 40 Stück Fisch angewendet. | | | | | |

Aus der Tabelle 4 geht hervor, dass das beanspruchte Speisefischaufzuchtverfahren für Kreislaufanlagen den angemeldeten technischen Effekt im Vergleich zum Prototyp-Verfahren erreicht.

Beispiel 5

Das beanspruchte Fischaufzuchtverfahren wurde in der aus dem Stand der Technik bekannten geschlossen Kreislaufanlage durchgeführt. Die Grundausführung der geschlossenen Kreislaufanlage ist in Fig. 2 dargestellt. Die geschlossene Kreislaufanlage enthält einen Wasser-Stabilisiertank 1, eine mechanische Filterungseinheit 2, eine biologische Anreicherungseinheit 3, einen Denitrifikations-Biofilter 4, einen Nitrifikations-Biofilter 5, einen Belüftungskanal 6, eine UV-Bestrahlungseinheit 7, einen Boiler 8, eine Wasser-pH-Stabilisiereinheit 9, eine Hauptpumpe 10, einen ersten Luftverdichter 11, Fischtanks 12 - 21, einen Wasserreservetank 27, einen zweiten Luftverdichter 28, eine Frischwasserzugabe-Einheit 29, eine Abführungseinheit 30 zur Abführung von Abwasser und Sedimenten aus der biologischen Anreicherungseinheit, dem Denitrifikations-Biofilter und dem Nitrifikations-Biofilter, einen ersten Verschluss 31, einen zweiten Verschluss 32, einen dritten Verschluss 33, eine Füllstandautomatikeinheit 34, eine Wasserparameterüberwachungs- und - steuereinheit 35 und eine Absaugpumpe 36 zur Abförderung von Sedimenten aus der biologischen Wasseranreicherungseinheit, dem Denitrifikations-Biofilter und dem Nitrifikations-Biofilter. Der Inhalt von 10 Fischtanks beträgt 1750 m$^3$. Dieser Inhalt wird zu 84% mit Wasser gefüllt. Der Wasserstand in der eingesetzten Anlage wird durch die Füllstandautomatikeinheit aufrechterhalten. Der Nitrifikations-Biofilter hat den Inhalt von 105 m$^3$ und ist 3,6 Meter hoch. Der Denitrifikations-Biofilter hat den Inhalt von 8,4 m$^3$ und ist 4,8 Meter hoch. Die genannte geschlossene Kreislaufanlage wird mit Frischwasser (GOST 2874-82, Trinkwasser) aus der Frischwasserzugabe-Einheit vorgefüllt. Dieses Frischwasser wird zuerst über den Boiler in den Belüftungskanal gefördert. Der pH-Wert im genannten Belüftungskanal wird bei 7,0 aufrechterhalten. Die pH-Wert-Haltung erfolgt durch die Wasser-pH-Stabilisiereinheit aufgrund der Messdaten eines Wasser-pH-Sensors und dank der Anwendung einer ASU-UZV-Software (Urkunde über die staatliche Registrierung eines Computerprogramms "ASU-UZV-Software" RU 2015618912, Registrierungsdatum 19.08.2015). Das Programm wird auf einem IBM-kompatiblen Personalcomputer installiert. Die Konstanthaltung des pH-Werts wird dadurch erreicht, dass das Wasser mit einer entsprechenden Menge Lauge ergänzt wird. Danach bestrahlt die UV-Bestrahlungseinheit die Oberfläche des fließenden Wassers mit UV-Licht. Die Bestrahlung erfolgt anhand einer Software/Hardware-Lösung auf der Basis der ASU-UZV-Software. Die ASU-UZV-Software empfängt die Daten von einem Wasserklarheitssensor. Die Wellenlänge beträgt 266 nm, und die Bestrahlungsintensität liegt bei 50 mJ/cm$^2$.

Der Boiler wird mit Frischwasser gefüllt. Das Frischwasser im Fischtank wird durch die ASU-UZV-Software aufgrund der Messdaten eines Wassertemperatursensors auf konstant 16° C erwärmt. Das Wasser kommt in den Belüftungskanal. Danach fließt das Wasser in die Hauptpumpe. Unter der Wirkung der Hauptpumpe wird das Wasser an die Eintritte aller Fischtanks gefördert. Die Frischwasserförderleistung der Hauptpumpe in Richtung Fischtank wird so eingestellt, dass der Wasserdurchsatz über den Nitrifikations-Biofilter dem 14-fachen Inhalt des Nitrifikations-Biofilters pro Stunde, d. h. 1470 m$^3$/Stunde, gleich ist. Dabei beträgt die Umströmungsgeschwindigkeit der Oberfläche des Nitrifikations-Biofilters 1,47 m/Min. Dementsprechend wird die Wasserzufuhr in den Denitrifikations-Biofilter aufgrund der Bedingung des 1,1-fachen Inhalts des Nitrifikations-Biofilters pro Stunde, das heißt 9,24 m$^3$/Stunde, vorgegeben. In diesem Fall beträgt die Umströmungsgeschwindigkeit der Oberfläche des Denitrifikations-Biofilters 0,15 m/Min.

Die Aufrechterhaltung der benötigten Sauerstoffkonzentration im Wassermedium der eingesetzten Anlage erfolgt durch die ASU-UZV-Software aufgrund der Messdaten eines Sauerstoffsensos. Die ASU-UZV-Software steuert die Leistung des ersten Luftverdichters. Der genannte Luftverdichter hält die Sauerstoffkonzentration im Wasser am Eintritt des Nitrifikations-Biofilters auf min. 5,5 mg/Liter. Die ASU-UZV-Software steuert die Funktion der biologischen Wasseranreicherungseinheit aufgrund der Messdaten vom Sauerstoffsensor, um die Sauerstoffkonzentration am Eintritt des Denitrifikations-Biofilters bei 0,9 mg/Liter aufrechtzuerhalten.

Die Aufrechterhaltung der benötigten Kohlendioxid-Konzentration im Wassermedium erfolgt durch die ASU-UZV-Software aufgrund der Messdaten eines Kohlendioxidsensors. Die ASU-UZV-Software steuert die Leistungen sowohl des ersten als auch des zweiten Luftverdichters. Die beiden genannten Luftverdichter halten die Kohlendioxid-Konzentration im Wasser am Eintritt der Hauptpumpe bei 20 ml/Liter.

Nach der mechanischen Filterung fließt der größte Teil des Wassers über den dritten Verschluss in den Nitrifikations-Biofilter. Das sedimenthaltige Wasser kommt in die biologische Anreicherungseinheit. Von da aus wird das sedimenthaltige Wasser in die Abführungseinheit abgepumpt. Folglich hat die eingesetzte Anlage Wasserverluste, die dadurch ausgeglichen werden, dass das Wasser aus der Frischwasserzugabe-Einheit in den Belüftungskanal über den Boiler in der Menge von 0,8-fachem Inhalt der Nitrifikationsanlage pro Tag, d. h. 84 m$^3$/Tag, gefördert wird.

Die zur Durchführung des beanspruchten Verfahrens eingesetzte Anlage wird in einem 8 Stunden langen Probelauf mit genannten Parametern betrieben. In diesem Zeitraum werden stabile Betriebszustände der Füllstandautomatikeinheit und der Wasserparameterüberwachungs- und -steuereinheit erreicht. Dann wird der Fischtank mit Goldforelle in durchschnittlicher Einwaage von 0,05 kg und mit einer Besatzdichte bis zu 8,2 kg/m$^3$ besetzt.

Nach der Besetzung der Fischtanks mit 241000 Stück Goldforelle in durchschnittlicher Einwaage von 0,05 kg (Besatzdichte 8,2 kg/m$^3$) werden die Goldforellen alle 60 Minuten gefüttert. Das Futtergewicht wird aus dem Verhältnis 3,6% des gesamten Fischgewichts im Fischbecken pro 24 Stunden bestimmt. Die Aktualisierung der dem Fisch zugeführten Futtermenge wird alle 15 Tage vorgenommen. Als Nahrung werden Extrudate mit einem Rohproteingehalt von 47% und einem Fettgehalt von 16% verwendet. Nach dem Prototypverfahren wird der Fischtank ebenfalls mit 242200 Stück Goldforelle in durchschnittlicher Einwaage von 0,05 kg (Besatzdichte 8,2 kg/m$^3$) besetzt. Die Fische werden alle 60 Minuten gefüttert, wobei das Futtergewicht aus dem Verhältnis 3,6% des gesamten Fischgewichts im Fischbecken pro 24 Stunden bestimmt wird. Die Aktualisierung der dem Fisch zugeführten Futtermenge wird alle 15 Tage vorgenommen. Als Nahrung werden Extrudate mit einem Rohproteingehalt von 47% und einem Fettgehalt von 16% verwendet.

Die Vergleichsdaten zwischen dem beanspruchten und dem Prototypverfahren wurden nach Ablauf von 3 Monaten bewertet und sind in Tabelle 5 aufgeführt.

Tabelle 5

| Fischaufzuchtverfahren | Zuchtdauer, Monate | Ursprüngliches Fischgewicht in 10 Tanks nach der Besetzung, kg | Fischendgewicht in 10 Tanks, kg | Gemittelte tägliche Gewichtszunahme umgerechnet auf einen Fisch*, g | Anmerkung |
|---|---|---|---|---|---|
| Beanspruchtes Verfahren | 3 | 12050 | 116910 | 5,01 | Fischverlust während der Zucht: 8340 Stück |
| Prototyp-Verfahren | 3 | 12110 | 54178 | 2,08 | Fischverlust während der Zucht: 17256 Stück |

*Zur Mittelung der täglichen Gewichtszunahme umgerechnet auf einen Fisch wurde eine monatliche willkürliche Stichprobe in der Menge von 50 Stück angewendet.

Aus der Tabelle 5 geht hervor, dass das beanspruchte Speisefischaufzuchtverfahren für Kreislaufanlagen den angemeldeten technischen Effekt im Vergleich zum Prototyp-Verfahren erreicht.

Beispiel 6

Das beanspruchte Fischaufzuchtverfahren wurde in der aus dem Stand der Technik bekannten geschlossenen Kreislaufanlage durchgeführt. Die Grundausführung der geschlossenen Kreislaufanlage ist in Fig. 3 dargestellt. Die geschlossene Kreislaufanlage enthält einen Wasser-Stabilisiertank 1, eine mechanische Filterungseinheit 2, eine biologische Anreicherungseinheit 3, einen Denitrifikations-Biofilter 4, einen Nitrifikations-Biofilter 5, einen Belüftungskanal 6, eine UV-Bestrahlungseinheit 7, einen Boiler 8, eine Wasser-pH-Stabilisiereinheit 9, eine Hauptpumpe 10, einen ersten Luftverdichter 11, Fischtanks 12 - 26, einen Wasserreservetank 27, einen zweiten Luftverdichter 28, eine Frischwasserzugabe-Einheit 29, eine Abführungseinheit 30 zur Abführung von Abwasser und Sedimenten aus der biologischen Wasseranreicherungseinheit, dem Denitrifikations-Biofilter und dem Nitrifikations-Biofilter, einen ersten Verschluss 31, einen zweiten Verschluss 32, einen dritten Verschluss 33, eine Füllstandautomatikeinheit 34, eine Wasserparameterüberwachungs- und - steuereinheit 35 und eine Absaugpumpe 36 zur Abförderung von Sedimenten aus der biologischen Wasseranreicherungseinheit, dem Denitrifikations-Biofilter und dem Nitrifikations-Biofilter. Der Inhalt von 15 Fischtanks beträgt 1714 m$^3$, und dieser wird mit Wasser zu 84% gefüllt. Der Wasserstand in der eingesetzten Anlage wird durch die Füllstandautomatikeinheit aufrechterhalten. Der Nitrifikations-Biofilter hat den Inhalt von 120 m$^3$ und ist 4 m hoch. Der Denitrifikations-Biofilter hat den Inhalt von 9 m$^3$ und ist 5 Meter hoch.

Die geschlossene Kreislaufanlage wird mit Frischwasser (GOST 2874-82, Trinkwasser) aus der Frischwasserzugabe-Einheit vorgefüllt. Dieses Frischwasser wird zuerst in den Belüftungskanal gefördert. Der pH-Wert im genannten Belüftungskanal wird bei 7,2 aufrechterhalten. Die konstante pH-Wert-Haltung erfolgt durch die Wasser-pH-Stabilisiereinheit aufgrund der Messdaten eines Wasser-pH-Sensors und dank der Anwendung der ASU-UZV-Software (Urkunde über die staatliche Registrierung eines Computerprogramms "ASU-UZV-Software" RU 2015618912, Registrierungsdatum 19.08.2015). Das Programm wird auf einem IBM-kompatiblen Personalcomputer installiert. Die Konstanthaltung des pH-Werts wird dadurch erreicht, dass das Wasser mit einer entsprechenden Menge Lauge ergänzt wird. Danach bestrahlt die UV-Bestrahlungseinheit die Oberfläche des fließenden Wassers mit UV-Licht. Die Bestrahlung erfolgt anhand der ASU-UZV-Software. Die ASU-UZV-Software empfängt die Daten von einem Wasserklarheitssensor. Die Wellenlänge beträgt 254 nm, und die Bestrahlungsintensität beträgt 65 mJ/cm$^2$.

Das Wasser aus dem Belüftungskanal füllt den Boiler. Durch die ASU-UZV-Software wird das Wasser aufgrund der Messdaten eines Wassertemperatursensors auf die Temperatur von 26° C erwärmt und in den Belüftungskanal rückgeführt. Danach fließt das Wasser in die Hauptpumpe. Unter der Wirkung der Hauptpumpe wird das Wasser an die Eintritte aller Fischtanks gefördert. Die Förderleistung der Hauptpumpe in Richtung Fischtanks wird so eingestellt, dass der Wasserdurchsatz über den Nitrifikations-Biofilter dem 12 -fachen Inhalt des Nitrifikations-Biofilters pro Stunde gleich ist, d. h. 1440 m$^3$/Stunde beträgt. Dabei liegt die Umströmungsgeschwindigkeit der Oberfläche des Nitrifikations-Biofilters bei 1,4 m/Min. Dementsprechend wird die Wasserzufuhr in den Denitrifikations-Biofilter aufgrund der Bedingung des 1,2-fachen Inhalts des Denitrifikations-Biofilters pro Stunde, d. h. 10,8 m$^3$/Stunde, vorgegeben. In diesem Fall beträgt die Umströmungsgeschwindigkeit der Oberfläche des Denitrifikations-Biofilters 0,18 m/Min.

Die Aufrechterhaltung der benötigten Sauerstoffkonzentration im Wassermedium der eingesetzten Anlage erfolgt durch die ASU-UZV-Software aufgrund der Messdaten eines Sauerstoffsensors, wobei die ASU-UZV-Software die Leistung des ersten Luftverdichters steuert. Dank der Funktion des genannten Luftverdichters wird die Sauerstoffkonzentration im Wasser am Eintritt des Nitrifikations-Biofilters auf min. 4,5 mg/Liter konstant gehalten. Die Funktion der biologischen Wasseranreicherungseinheit zwecks Konstanthaltung der Sauerstoffkonzentration am Eintritt des Denitrifikations-Biofilters bei 1,2 mg/Liter wird durch die ASU-UZV-Software aufgrund der Messdaten vom Sauerstoffsensor gesteuert.

Die benötigte Kohlendioxid-Konzentration im Wassermedium der eingesetzten Kreislaufanlage wird durch die ASU-UZV-Software aufgrund der Messdaten eines Kohlendioxidsensors aufrechterhalten, wobei die ASU-UZV-Software die Leistung sowohl des ersten als auch des zweiten Luftverdichters steuert. Dank der Funktion der genannten Luftverdichter wird die Kohlendioxid-Konzentration im Wasser am Eintritt der Hauptpumpe bei 5 ml/Liter gehalten.

Nach der mechanischen Filterung fließt der größte Teil des Wassers über den dritten Verschluss in den Nitrifikations-Biofilter. Das sedimenthaltige Wasser kommt in die biologische Anreicherungseinheit. Von da aus wird das sedimenthaltige Wasser in die Abführungseinheit abgepumpt. Folglich hat die eingesetzte Anlage Wasserverluste, die dadurch ausgeglichen werden, dass das Wasser aus der Frischwasserzugabe-Einheit dem Belüftungskanal über den Boiler in einer Menge des 1,0-fachen Inhalts der Nitrifikationsanlage täglich, d. h. 120 m$^3$/Tag, zugeführt wird.

Die eingesetzte Anlage wird in einem 5 Stunden langen Probelauf mit genannten Parametern betrieben. In diesem Zeitraum werden stabile Betriebszustände der Füllstandautomatikeinheit und der Wasserparameterüberwachungs- und -steuereinheit erreicht. Danach werden die Fischtanks mit Buntbarschen (Oreochromis niloticus) in durchschnittlicher Einwaage von 0,4 kg mit einer Besatzdichte von 19,7 kg/m$^3$ besetzt.

Nach der Besetzung der Fischtanks mit 70850 Stück Buntbarschen in durchschnittlicher Einwaage von 0,4 kg (Besatzdichte 9,7 kg/m$^3$) werden die Fische alle 120 Minuten gefüttert. Die Futtermenge wird aus dem Verhältnis 2,4% des gesamten Fischgewichts im Fischbecken pro 24 Stunden bestimmt. Die Aktualisierung der dem Fisch zugeführten Futtermenge wird alle 30 Tage vorgenommen. Als Nahrung werden Extrudate mit einem Rohproteingehalt von 44% und einem Fettgehalt von 11% verwendet. Beim Prototypverfahren werden die Fischbecken ebenfalls mit 72340 Stück Buntbarschen in durchschnittlicher Einwaage von 0,4 kg (Besatzdichte 20,1 kg/m$^3$) besetzt. Die Buntbarsche werden alle 120 Minuten gefüttert, wobei die Futtermenge aus dem Verhältnis 2,4% des gesamten Fischgewichts im Fischbecken pro 24 Stunden bestimmt wird. Die Aktualisierung der dem Fisch zugeführten Futtermenge wird alle 30 Tage vorgenommen. Als Nahrung werden Extrudate mit einem Rohproteingehalt von 44% und einem Fettgehalt von 11% verwendet.

Die Vergleichsdaten zwischen dem beanspruchten und dem Prototypverfahren wurden nach Ablauf von 6 Monaten bewertet und sind Tabelle 6 entnehmbar.

Tabelle 6

| Fischaufzuchtverfahren | Zuchtdauer, Monate | Ursprüngliches Fischgewicht in 15 Tanks nach der Besetzung, kg | Fischendgewicht in 15 Tanks, kg | Gemittelte tägliche Gewichtszunahme umgerechnet auf einen Fisch*, g | Anmerkung |
|---|---|---|---|---|---|
| Beanspruchtes Verfahren | 6 | 28340 | 68311 | 3,39 | Fischverlust während der Zucht: 5248 Stück |
| Prototyp-Verfahren | 6 | 28936 | 42819 | 1,27 | Fischverlust während der Zucht: 11627 Stück |
| *Zur Mittelung der täglichen Gewichtszunahme umgerechnet auf einen Fisch wurde eine monatliche willkürliche Stichprobe in der Menge von 50 Stück angewendet. | | | | | |

Aus der Tabelle 6 geht hervor, dass das beanspruchte Verfahren zur Aufzucht von Speisefischen, in diesem Fall Buntbarschen, in Kreislaufanlagen den angemeldeten technischen Effekt im Vergleich zum Prototyp-Verfahren erreicht.

Die in den Ansprüchen des beanspruchten Verfahrens definierte Gesamtheit von wesentlichen Merkmalen ist aus dem Stand der Technik nicht bekannt und gibt Anlass zur Annahme, dass das vorgeschlagene Verfahren neu ist.

Das beanspruchte Verfahren kann unter Anwendung von den aus dem Stand der Technik bekannten Mitteln und Stoffen durchgeführt werden, folglich kann angenommen werden, dass die Erfindung gewerblich anwendbar ist.

**Patentansprüche**

1. Speisefischaufzuchtverfahren für Kreislaufanlagen,
   **dadurch gekennzeichnet,**
   **dass** die Fische in wassergefüllte Tanks zur Aufzucht ausgesetzt und regelmäßig gefüttert werden, wobei bestimmte Wasserparameter und Wasserversorgungskenndaten aufrechterhalten werden,
   **dass** die Wasserfördermenge zu einer Nitrifikationsanlage dabei in einem Bereich zwischen dem 7- und 14-fachen Inhalt der Nitrifikationsanlage pro Stunde eingestellt ist, die Umströmungsgeschwindigkeit der Oberfläche der Nitrifikationsanlage zwischen 0,17 und 0,48 von der Höhe der Nitrifikationsanlage Meter pro Minute beträgt, die Wasserfördermenge in Richtung eines Denitrifizierungs-Reaktors zwischen dem 9- und 1,2-fachen Inhalt des Denitrifizierungs-Reaktors pro Stunde eingestellt wird, wobei die Umströmungsgeschwindigkeit der Oberfläche des Denitrifizierungs-Reaktors zwischen 0,029 und 0,031 von der Höhe des Denitrifizierungs-Reaktors Meter pro Minute beträgt,
   **dass** die Wassertemperatur dabei in einem Wertebereich zwischen 11 und 28 Grad Celsius gehalten wird und der Wasser-pH-Wert in einem Bereich von 7,0 bis 7,2 aufrechterhalten wird,
   **dass** die Sauerstoffkonzentration im Wasser am Eintritt der Nitrifikationsanlage bei mindestens 4,4 mg/Liter gehalten wird und die Sauerstoffkonzentration am Eintritt des Denitrifizierungs-Reaktors zwischen 0,9 und 1,2 mg/Liter gehalten wird,
   **dass** die Kohlendioxid-Konzentration im Wasser an der Saugseite einer Pumpe in einem Bereich von 15 bis 25 ml/Liter aufrechterhalten wird und
   **dass** dabei eine kontinuierliche mechanische Wasserfilterung durchgeführt wird und das Frischwasser von außen in einen Belüftungskanal mit einer Leistung zwischen dem 0,5- und 0,9-fachem Inhalt der Nitrifikationsanlage pro Tag zugeführt wird.

2. Verfahren nach Anspruch 1,
   **dadurch gekennzeichnet,**
   **dass** das Wasser mit UV-Licht mit einer Bestrahlungsintensität von 40 bis 90 mJ/cm$^2$ bestrahlt wird, wobei der UV-Wellenlängenbereich zwischen 205 und 315 Nanometer liegt.

3. Verfahren nach Anspruch 1,
   **dadurch gekennzeichnet,**
   **dass** der Wasser-pH-Wert mittels Zugabe von Lauge angepasst wird.

4. Verfahren nach Anspruch 1,
   **dadurch gekennzeichnet,**
   **dass** die Sauerstoffkonzentration im Wasser mittels Wasserbelüftung erhöht wird.

5. Verfahren nach Anspruch 1,
   **dadurch gekennzeichnet,**
   **dass** die Kohlendioxid-Konzentration im Wasser mittels Wasserbelüftung vermindert wird.

6. Verfahren nach Anspruch 1,
   **dadurch gekennzeichnet,**
   **dass** das Wasser mit einem Boiler erwärmt wird.

7. Speisefischaufzuchtverfahren für Kreislaufanlagen,
   **dadurch gekennzeichnet,**
   **dass** die Fische in wassergefüllte Tanks zur Aufzucht und regelmäßigen Fütterung ausgesetzt werden, wobei vorgegebene Wasserparameter und Wasserversorgungskenndaten durch den Einsatz einer computergestützten Steuerung auf der Basis einer ASU-UZV-Software (automatisiertes Leittechniksystem für geschlossene Kreislaufanlagen) gehalten werden,

**dass** die Wasserfördermenge zu einer Nitrifikationsanlage dabei in einem Bereich zwischen dem 7- und 14-fachen Inhalt der Nitrifikationsanlage pro Stunde eingestellt wird, wobei die Umströmungsgeschwindigkeit der Oberfläche der Nitrifikationsanlage im Bereich zwischen 0,17 und 0,48 von der Höhe der Nitrifikationsanlage Meter pro Minute liegt, und die Wasserfördermenge in Richtung Denitrifizierungs-Reaktor zwischen dem 9- und 1,2-fachen Inhalt des Denitrifizierungs-Reaktors pro Stunde eingestellt wird, wobei die Umströmungsgeschwindigkeit der Oberfläche des Denitrifizierungs-Reaktors zwischen 0,029 und 0,031 von der Höhe des Denitrifizierungs-Reaktors Meter pro Minute liegt, dass die Wassertemperatur dabei in einem Wertebereich zwischen 11 und 28 Grad Celsius gehalten wird,

**dass** der Wasser-pH-Wert in einem Bereich von 7,0 bis 7,2 aufrechterhalten wird,

**dass** die Sauerstoffkonzentration im Wasser am Eintritt der Nitrifikationsanlage bei mindestens 4,4 mg/Liter gehalten wird, und die Sauerstoffkonzentration am Eintritt des Denitrifizierungs-Reaktors zwischen 0,9 und 1,2 mg/Liter gehalten wird,

**dass** die Kohlendioxid-Konzentration im Wasser am Eintritt der Hauptpumpe in einem Bereich von 15 bis 25 ml/Liter aufrechterhalten wird,

**dass** dabei eine kontinuierliche mechanische Wasserfilterung durchgeführt wird und

**dass** das Frischwasser dabei von außen in den Belüftungskanal mit einer Leistung zwischen dem 0,5-fachen und 0,9-fachen Inhalt der Nitrifikationsanlage pro Tag zugeführt wird.

8. Verfahren nach Anspruch 7,
**dadurch gekennzeichnet,**
**dass** die Wasserparametersteuerung aufgrund der Messdaten von den Sensoren für Wasserstand, Wasserklarheit, Sauerstoffgehalt im Wasser, Kohlendioxidgehalt im Wasser, Wasser-pH und Wassertemperatur erfolgt.

9. Verfahren nach Anspruch 7,
**dadurch gekennzeichnet,**
**dass** das Wasser mit UV-Licht mit einer Bestrahlungsintensität zwischen 40 und 90 mJ/cm$^2$ bestrahlt wird, wobei der UV-Wellenlängenbereich zwischen 205 und 315 Nanometer liegt.

10. Verfahren nach Anspruch 7,
**dadurch gekennzeichnet,**
**dass** der Wasser-pH-Wert mittels Zugabe von Lauge angepasst wird.

11. Verfahren nach Anspruch 7,
**dadurch gekennzeichnet,**
**dass** die Sauerstoffkonzentration im Wasser mittels Wasserbelüftung erhöht wird.

12. Verfahren nach Anspruch 7,
**dadurch gekennzeichnet,**
**dass** die Kohlendioxid-Konzentration im Wasser mittels Wasserbelüftung vermindert wird.

13. Verfahren nach Anspruch 7,
**dadurch gekennzeichnet,**
**dass** das Wasser mit einem Boiler erwärmt wird.

Fig. 1

Fig. 2

Fig. 3

Europäisches
Patentamt

European
Patent Office

Office européen
des brevets

# EUROPÄISCHER RECHERCHENBERICHT

Nummer der Anmeldung

EP 16 19 6160

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 103 004 668 A (LAIZHOU MINGBO AQUATIC CO LTD) 3. April 2013 (2013-04-03) <br> * Absatz [0038] * <br> * Anspruch 1 * <br> ----- | 1-13 | INV. <br> A01K63/04 <br> A01K61/10 |
| A | US 2008/004181 A1 (YOSHIKAWA SHINICHI [JP] ET AL) 3. Januar 2008 (2008-01-03) <br> * Absätze [0151], [0179] - [0180], [0187] * <br> * Anspruch 9 * <br> ----- | 1-13 | |

RECHERCHIERTE
SACHGEBIETE (IPC)

A01K

Der vorliegende Recherchenbericht wurde für alle Patentansprüche erstellt

| Recherchenort | Abschlußdatum der Recherche | Prüfer |
|---|---|---|
| Den Haag | 30. März 2017 | Kiyak, Ismail Utku |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
   ........................................................................
& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 19 6160

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-03-2017

| Im Recherchenbericht angeführtes Patentdokument | Datum der Veröffentlichung | Mitglied(er) der Patentfamilie | Datum der Veröffentlichung |
|---|---|---|---|
| CN 103004668 A | 03-04-2013 | KEINE | |
| US 2008004181 A1 | 03-01-2008 | EP 1872655 A2 | 02-01-2008 |
| | | JP 4863110 B2 | 25-01-2012 |
| | | JP 2008005747 A | 17-01-2008 |
| | | US 2008004181 A1 | 03-01-2008 |
| | | US 2009188858 A1 | 30-07-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2368135
- RU 153081
- RU 2015618912